# EUROPÄISCHE PATENTSCHRIFT

(11) **EP 2 905 111 B1**
(45) Veröffentlichungstag und Bekanntmachung des Hinweises auf die Patenterteilung: **24.04.2019**
(21) Anmeldenummer: 15153605.9
(22) Anmeldetag: 03.02.2015
(51) Int. Cl.: B25J 9/16, G05B 19/423, B25J 9/22

(54) **Verfahren zum Programmieren eines Industrieroboters und zugehöriger Industrieroboter**
Method for programming an industrial robot and associated industrial robot
Procédé de programmation d'un robot industriel et robot industriel correspondant

(30) Priorität: 06.02.2014 DE 102014202145
(43) Veröffentlichungstag der Anmeldung: 12.08.2015
(73) Patentinhaber: KUKA Deutschland GmbH, 86165 Augsburg (DE)
(72) Erfinder: Hietmann, Gerhard, 86405 Herbertshofen (DE); Wüllner, Philipp, 34431 Marsberg (DE)
(74) Vertreter: Ege Lee & Partner Patentanwälte PartGmbB

(56) Entgegenhaltungen:
- WO-A1-2010/069429
- WO-A1-2011/018117
- DE-A1-102012 009 010
- DE-T2- 69 622 572
- US-B1- 6 285 920

## Beschreibung

Die Erfindung betrifft ein Verfahren zum Programmieren eines Industrieroboters durch manuell geführtes Bewegen eines Manipulatorarms des Industrieroboters in wenigstens eine Pose, in der wenigstens eine in ein Roboterprogramm aufzunehmende Steuerungsgröße durch eine Steuervorrichtung des Industrieroboters erfasst und als Parameter eines zugeordneten Programmbefehls in dem Roboterprogramm gespeichert wird. Die Erfindung betrifft außerdem einen Industrieroboter, aufweisend eine Robotersteuerung, die ausgebildet und/oder eingerichtet ist, ein solches Verfahren durchzuführen.

Aus der WO 2010/069429 A1 ist ein Verfahren zur Befehlseingabe in eine Steuerung eines Manipulators, insbesondere eines Roboters bekannt, mit den Schritten des Erfassens einer ersten Kraft, die auf den Manipulator in einer ersten Richtung wirkt; des Vergleichens der erfassten ersten Kraft mit gespeicherten Kräften, denen je ein Befehl zugeordnet ist; und des Ausgebens des dieser gespeicherten Kraft zugeordneten Befehls an die Steuerung des Manipulators, falls die erfasste erste Kraft mit einer gespeicherten Kraft übereinstimmt.

Die DE 10 2012 009 010 A1 beschreibt ein Verfahren, bei dem eine Person einen zu automatisierenden und vom Roboter durchzuführenden Prozess manuell durchführt, wobei diese Durchführung mittels eines Erfassungselements erfasst wird. Dabei werden nicht nur die Positionen erfasst und daraus die zugehörigen Referenzpunkte ermittelt. Es werden auch die von der Person ausgeübten und die vom Roboter auszuübenden Kräfte und/oder Drehmomente erfasst und den Positionen bzw. den Referenzpunkten zugeordnet.

Die US 6,285,920 B1 beschreibt ein Verfahren durch manuelles Vormachen mit der Hand einer Person, die einen Bewegungszug durchführt, der dann vollständig als eine Bewegungsbahn gespeichert wird, die später vom Roboter automatisch ausgeführt werden kann.

Aufgabe der Erfindung ist es, ein Verfahren zum Programmieren eines Industrieroboters bereitzustellen, mit dem der Industrieroboter durch manuell geführtes Bewegen des Manipulatorarms auf einfache und genaue Weise programmiert werden kann.

Die Aufgabe der Erfindung wird gelöst durch ein Verfahren zum Programmieren eines Industrieroboters durch manuell geführtes Bewegen eines Manipulatorarms des Industrieroboters in wenigstens eine Pose, in der wenigstens eine in ein Roboterprogramm aufzunehmende Steuerungsgröße durch eine Steuervorrichtung des Industrieroboters erfasst und als Parameter eines zugeordneten Programmbefehls in dem Roboterprogramm gespeichert wird, aufweisend die Schritte:
- Auswählen einer Programmbefehlsart, zu der zugeordnete Parameter gespeichert werden sollen,
- fortlaufendes Erfassen und Zwischenspeichern der wenigstens einen aufzunehmenden Steuerungsgröße in vorbestimmten Zeitschritten während eines manuell geführten Handhabens des Manipulatorarms,
- fortlaufendes Erfassen wenigstens einer stellungs- und/oder bewegungsbezogenen Größe der jeweils momentanen Pose des Manipulatorarms, in vorbestimmten Zeitschritten während des manuell geführten Handhabens des Manipulatorarms,
- automatisches Vergleichen durch die Steuervorrichtung (3) der in vorbestimmten Zeitschritten erfassten stellungs- und/oder bewegungsbezogenen Größen mit vorbestimmten, ein Abbruchkriterium darstellenden stellungs- und/oder bewegungsbezogenen Größen, um ein repräsentatives Ereignis automatisch zu erkennen, welches eine charakteristische Bewegung des Manipulatorarms oder ein charakteristisches Stillstehen des Manipulatorarms ist, welches automatisch von der Steuervorrichtung als ein Signal interpretiert wird, die gewünschte Steuerungsgröße zu speichern,
- Speichern der gewünschten Steuerungsgröße als Parameter des ausgewählten Programmbefehls in dem Roboterprogramm, wenn einer der fortlaufend erfassten stellungs- und/oder bewegungsbezogenen Größen das Abbruchkriterium erfüllt.

Manipulatorarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Manipulatorarm mit mehreren über Gelenke verbundene Glieder und programmierbare Robotersteuerungen (Steuervorrichtungen) auf, die während des Betriebs die Bewegungsabläufe des Manipulatorarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Manipulatorarme können beispielsweise ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können. Ein mehrere über Gelenke verbundene Glieder aufweisende Manipulatorarm kann als ein Knickarmroboter mit mehreren seriell nacheinander angeordneten Gliedern und Gelenken konfiguriert sein, insbesondere kann der Manipulatorarm als ein Sechsachs-Knickarmroboter ausgebildet sein.

Manipulatorarme mit zugehörigen Robotersteuerungen, wie Industrieroboter können aber insbesondere auch so genannte Leichtbauroboter sein, die sich zunächst von üblichen Industrierobotern dadurch unterscheiden, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere kraft- und/oder momentengeregelt, beispielsweise in einer Nachgiebigkeitsregelung betrieben werden, statt positionsgeregelt betrieben werden, was beispielsweise ein manuelles Verstellen der Pose des Manipulatorarmes vereinfacht. Außerdem kann dadurch eine sichere Mensch-Maschine-Kooperation erreicht werden, da beispielsweise unbeabsichtigte Kollisionen des Manipulatorarmes mit Personen entweder verhindert oder zumindest derart abgeschwächt werden können, so dass den Personen kein Schaden entsteht. Ein solcher Manipulatorarm bzw. ein solcher Leichtbauroboter kann mehr als sechs Freiheitsgrade aufweisen, so dass insoweit ein überbestimmtes System geschaffen wird, wodurch derselbe Punkt im Raum in gleicher Orientierung in mehreren verschiedenen Posen des Manipulatorarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch ohne spezielle Sensoren, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Unter einem manuell geführten Bewegen des Manipulatorarms wird insbesondere verstanden, dass die momentanen Gelenksstellungen des Manipulatorarms dadurch verändert werden, dass ein Bediener des Industrieroboters den Manipulatorarm an einem oder mehreren seiner Glieder anfasst und beispielsweise durch Drücken, Ziehen und/oder Drehen des gegriffenen Gliedes oder der gegriffenen Glieder die Pose des Manipulatorarms verändert, d.h. verstellt. In einem grundlegenden Ausführungsbeispiel kann an dem in der kinematischen Kette letzten Glied des Manipulatorarms, d.h. am Handflansch des Manipulatorarms beispielsweise ein Griff befestigt oder zumindest ein Griffabschnitt vorgesehen sein, insbesondere starr befestigt sein, über den eine Führungskraft in die mechanische Struktur des Manipulatorarms eingeleitet werden kann. Eine solche vom Bediener des Industrieroboters auf den Manipulatorarm aufgebrachte Führungskraft kann beispielsweise durch speziell dazu ausgebildete und eingerichtete Sensoren, insbesondere Kraftsensoren unmittelbar gemessen werden, oder aus Messwerten an bereits vorhandenen Gelenkssensoren, insbesondere Kraft-/Momentsensoren des Manipulatorarms mittelbar errechnet oder indirekt aus Motorströmen der Antriebe des Gelenke des Industrieroboters bestimmt werden. Unter einem manuell geführten Bewegen des Manipulatorarms fällt erfindungsgemäß auch ein bloßes Festhalten des Manipulatorarms im Raum, so dass er seine momentane Pose unverändert beibehält. Insoweit wird unter einem Bewegen des Manipulatorarms generell ein Handhaben des Manipulatorarms verstanden, dass auch ein solches Festhalten in unveränderter Pose mit umfasst.

Unter der Pose des Manipulatorarms wird ganz allgemein die Summe aller Gelenkstellungen von Gelenken des Manipulatorarms verstanden, welche die einzelnen Glieder des Manipulatorarms verstellbar verbinden. Im engeren Sinne kann bei einem eindeutig bestimmten System unter Pose beispielsweise auch schon die Position und die Orientierung eines Bezugspunktes, wie beispielsweise eines Werkzeugbezugspunktes (Tool-Center-Points / TCP) des Manipulatorarms verstanden werden. Der Werkzeugbezugspunkt kann beispielsweise durch einen geeigneten Punkt an einem Handflansch des Manipulatorarms gebildet werden, an dem ein Greifer, ein Werkzeug oder eine sonstige Vorrichtung befestigt ist, um diese durch Verstellen der Pose des Manipulatorarms im Raum bewegen zu können. Ganz allgemein kann der Werkzeugbezugspunkt ein virtueller Raumpunkt auch außerhalb des Manipulatorarms sein, der jedoch geometrisch starr mit einem der Glieder des Manipulatorarms, insbesondere dem Handflansch des Manipulatorarms verbunden ist.

Ein Roboterprogramm bildet eine Steuerungsvorschrift, auf welche Art und Weise die Steuerungsvorrichtung den Manipulatorarm bzw. dessen Gelenke automatisch ansteuern soll, um die gewünschten Bewegungen und Aktionen des Manipulatorarms automatisch ausführen zu lassen. Ein Roboterprogramm enthält dazu Programmbefehle, welche beispielsweise bestimmte Bewegungsarten darstellen. Ein Programmbefehl kann aber auch nur das Einstellen eines Zustandes oder einer Eigenschaft des Manipulatorarms betreffen. Jedem Programmbefehl kann wenigstens ein Parameter zugeordnet sein. Im Falle eines Positionsbefehls kann der wenigstens eine Parameter beispielsweise durch die X-, Y- und Z-Positionswerte eines Werkzeugbezugspunktes im kartesischen Raum gebildet werden. In anderen Fällen kann der Parameter beispielsweise eine Geschwindigkeit, eine maximale Beschleunigung oder ein Nachgiebigkeitswert bzw. Steifigkeitswert sein, der insoweit eine Eigenschaft des Manipulatorarms darstellt und der Manipulatorarm programmgesteuert diese Eigenschaft, insbesondere auch über mehrere Stützpunkte hinweg, automatisch annehmen kann.

Besonders die Programmierung von Robotermontageaufgaben erfordert neben dem Einlernen (teach-in) von Posen als Steuerungsgrößen, auch in großem Umfang das Einlernen von anderen Steuerungsgrößen, wie Richtung, Kraft, Moment, Rotationsachse, des Weiteren auch Sensorsignale.

Es ist prinzipiell bekannt, dass Steuerungsgrößen dadurch gelernt werden können, d.h. die Steuerungsgrößen in ein zu erstellendes Roboterprogramm dadurch übernommen werden können, dass der Manipulatorarm manuell geführt wird. Beispielsweise zum Erlernen eines später durch einen Werkzeugbezugspunkt des Manipulatorarms automatisch anzufahrenden Punktes im Raum, wird der Manipulatorarm beispielsweise in einer Gravitationskompensationsregelung per Hand so eingestellt, dass der Werkzeugbezugspunkt in dem gewünschten, d.h. in dem in das Roboterprogramm abzuspeichernden Punkt im Raum zu liegen kommt. Um den gewünschten Punkt nun in das Roboterprogramm abspeichern zu können, ist im Allgemeinen eine Bestätigungstaste zu betätigen, welche die Steuerungsvorrichtung anweist, die momentan eingestellte Position des Werkzeugbezugspunktes als einen Parameter eines zugeordneten Programmbefehls in dem Roboterprogramm abzuspeichern.

In einer Steifigkeitsregelung oder Nachgiebigkeitsregelung des Industrieroboters können Kräfte, Momente, Posen und Richtungen gelernt werden. Da in diesem Modus der Manipulatorarm durch eine angesteuerte Federwirkung an einen Bezugspunkt zurückgezogen wird, muss der Manipulatorarm im gewünschten, d.h. zu programmierenden Auslenkungspunkt festgehalten werden, solange bis durch manuelles Betätigen der Bestätigungstaste die momentan eingestellte Steuerungsgröße als ein Parameter eines zugeordneten Programmbefehls in dem Roboterprogramm abgespeichert ist. Ein Festhalten des Manipulatorarms an dem gewünschten Auslenkungspunkt ist für eine ausreichende Genauigkeit bei der Aufnahme der abzuspeichernden Steuerungsgröße jedoch oft nur dann gewährleistet, wenn der Manipulatorarm mit zwei Händen festgehalten wird.

In einer Gravitationskompensationsregelung verbleibt der Manipulatorarm ohne äußere Krafteinwirkung an der Pose, in der er durch den Anwender positioniert wurde. In diesem Modus können Posen und Richtungen, welche durch zwei verschiedene Posen definiert werden können, gelernt werden. In der Praxis können jedoch Modellfehler, wie beispielsweise falsche Lastdaten, auch dazu führen, dass der Manipulatorarm aus seiner gewünschten Position in unerwünschter Weise herausdriftet. Auch in einem solchen Falle muss zur Aufnahme, d.h. zum Programmieren, insbesondere Speichern eines Punktes der Manipulatorarm in der gewünschten Pose festgehalten werden. Um eine gewisse Präzision bei der Positionierung zu erzielen, sind auch hierbei zwei Hände des Anwenders erforderlich.

Sowohl in einer Gravitationskompensationsregelung, als auch in einer Steifigkeitsregelung sind zum Lernen der oben aufgeführten Größen beide Hände einer Person erforderlich. Es fehlt insoweit die dritte Hand, um eine Bestätigungstaste manuell zu betätigen, d.h. der Steuerungsvorrichtung das Signal mitzuteilen, nun die gewünschten Steuerungsgrößen der aktuellen Situation, beispielsweise die Pose, eine Kraft- und/oder Momenten-Einwirkung oder weitere Sensorsignale in das Roboterprogramm zu speichern.

Eine auf Bewegung basierte Gestenerkennung, wie beispielsweise in der WO 2010/069429 A1 beschrieben, ist in diesem Fall nicht möglich, da ja eine bestimmte Pose, Kraft oder Moment erlernt, d.h. in das Roboterprogramm gespeichert werden soll und der Manipulatorarm insoweit nicht mehr bewegt werden darf bzw. soll.

Grundgedanke der Erfindung ist es deshalb, dass die Steuervorrichtung schon während des Handhabens des Manipulatorarms, also schon vor einem gewünschten Aufnehmen (touchup) bzw. Speichern der aufzunehmenden Steuerungsgröße, diese Steuerungsgröße fortlaufend überwacht und insoweit vorläufig mitprotokolliert, bis ein repräsentatives Ereignis eintritt, welches eine charakteristische Bewegung des Manipulatorarms oder ein charakteristisches Stillstehen des Manipulatorarms sein kann, welches automatisch von der Steuervorrichtung als ein Signal erkannt wird, die gewünschte Steuerungsgröße nun aufzunehmen. Das repräsentative Ereignis, insbesondere die charakteristische Bewegung des Manipulatorarms oder das charakteristische Stillstehen des Manipulatorarms wird insoweit als eine Zustimmaktion interpretiert, welche die Steuerungsvorrichtung automatisch veranlasst, die gewünschte Steuerungsgröße als ein Parameter eines zuvor ausgewählten Programmbefehls in dem Roboterprogramm zu speichern.

Am Anfang eines solchen erfindungsgemäßen Programmierverfahrens steht zunächst ein Auswählen einer Programmbefehlsart, zu der zugeordnete Parameter gespeichert werden sollen. Eine solche Auswahl kann beispielsweise vor dem manuell geführten Bewegen des Manipulatorarms zur durch einen Benutzer, d.h. durch den Roboterprogrammierer erfolgen, beispielsweise indem er an einem der Steuervorrichtung des Industrieroboters zugeordneten Handeingabegerät mittels Tasten, einem Menü und/oder einem Display eine gewünschte Programmbefehlsart auswählt. Die auszuwählende Programmbefehlsart kann aber auch automatisch durch die Steuerungsvorrichtung ausgewählt werden, beispielsweise auf Grundlage einer bereits vor Beginn des erfindungsgemäßen Programmierverfahrens in dem Roboterprogramm vorhandenen, interpretierten Programmzeile. Die auszuwählende Programmbefehlsart kann ein Bewegungsbefehl, insbesondere ein Punkt-zu-Punkt-Befehl, ein Linear-Befehl oder ein Spline-Befehl sein und/oder ein Parametrierungsbefehl, insbesondere der Nachgiebigkeit oder der Steifigkeit, einer die Steuerungsvorrichtung ansteuernden Roboterprogrammiersprache sein.

Nachdem eine Programmbefehlsart ausgewählt ist, beginnt das fortlaufende Erfassen und Zwischenspeichern der wenigstens einen aufzunehmenden Steuerungsgröße in vorbestimmten Zeitschritten. Die Zeitschritte können beispielsweise die von der Steuervorrichtung an sich bereits verwendeten und als solche bekannten Interpolationstakte sein. Währenddessen wird der Manipulatorarm manuell geführt gehandhabt und entsprechend durch die Steuervorrichtung angesteuert, um sich zu bewegen.

Parallel dazu erfolgt erfindungsgemäß ein fortlaufendes Erfassen wenigstens einer stellungs- und/oder bewegungsbezogenen Größe der jeweils momentanen Pose des Manipulatorarms, in vorbestimmten Zeitschritten während des manuell geführten Handhabens des Manipulatorarms. Auch hierbei können die Zeitschritte beispielsweise die von der Steuervorrichtung an sich bereits verwendeten und als solche bekannten Interpolationstakte sein. Durch ein fortlaufendes Erfassen wenigstens einer stellungs- und/oder bewegungsbezogenen Größe kann die Steuerungsvorrichtung ein repräsentatives Ereignis automatisch erkennen, welches eine charakteristische Bewegung des Manipulatorarms oder ein charakteristisches Stillstehen des Manipulatorarms sein kann, welches automatisch von der Steuervorrichtung als ein Signal interpretiert wird, die gewünschte Steuerungsgröße nun aufzunehmen.

Ein automatisches Erkennen des repräsentativen Ereignisses erfolgt erfindungsgemäß dadurch, dass ein Vergleichen der in vorbestimmten Zeitschritten erfassten stellungs- und/oder bewegungsbezogenen Größen mit vorbestimmten, ein Abbruchkriterium darstellenden stellungs- und/oder bewegungsbezogenen Größen von der Steuervorrichtung automatisch durchgeführt wird. Das Abbruchkriterium kann beispielsweise ein Stillstehen des Manipulatorarms über einen gewissen Zeitraum hinweg darstellen.

Sobald das repräsentative Ereignis von der Steuervorrichtung automatisch erkannt ist, erfolgt das Speichern der Steuerungsgröße als Parameter des ausgewählten Programmbefehls in dem Roboterprogramm, wenn einer der fortlaufend erfassten stellungs- und/oder bewegungsbezogenen Größen das Abbruchkriterium erfüllt.

In einer ersten Variante des Verfahrens können als weitere Schritte vorgesehen sein, dass
- der Manipulatorarm durch die Steuervorrichtung in einer aktiven Nachgiebigkeitsregelung betrieben wird,
- das fortlaufende Erfassen und Zwischenspeichern der wenigstens einen aufzunehmenden Steuerungsgröße mittels der Steuervorrichtung erfolgt, wenn der Manipulatorarm manuell aus einer Grundpose heraus in eine Erfassungspose hineinbewegt ist und
- das Speichern der Steuerungsgröße als Parameter des ausgewählten Programmbefehls in dem Roboterprogramm erfolgt, wenn durch das Vergleichen der erfassten stellungs- und/oder bewegungsbezogenen Größen mit den vorbestimmten stellungs- und/oder bewegungsbezogenen Größen, ein aufgrund der Nachgiebigkeitsregelung erfolgendes Zurückbewegen des Manipulatorarms aus der Erfassungspose in die Grundpose durch die Steuervorrichtung automatisch erkannt wird.

In dieser ersten Variante des Verfahrens kann die Steuerungsvorrichtung ein repräsentatives Ereignis automatisch erkennen, welches eine charakteristische Bewegung des Manipulatorarms ist.

Das repräsentative Ereignis kann insoweit ein Loslass-Ereignis sein.

Beispielsweise bei einer aktiven Nachgiebigkeits- oder Steifigkeitsregelung kann der Manipulatorarm aus einer Grundpose heraus ausgelenkt werden, um eine Steuerungsgröße, beispielsweise eine Pose, eine Richtung, eine Kraft oder ein Moment zu lernen, d.h. in das Roboterprogramm aufzunehmen. Wenn die gewünschte Steuerungsgröße in einer aus der Grundpose herausgelenkten, insoweit federvorgespannten Pose des Manipulatorarms eingestellt ist, wird der Manipulatorarm losgelassen. Aufgrund der Nachgiebigkeits- oder Steifigkeitsregelung schwenkt der Manipulatorarm unmittelbar nach dem Loslassen wieder in die Grundpose zurück. Dieses Ereignis des Loslassens des ausgelenkten Manipulatorarms, identifiziert beispielsweise durch abrupte Änderung der gemessenen Gelenkmomente oder Gelenkwinkelwerte des Manipulatorarms, wird als eine stellungs- und/oder bewegungsbezogene Größe verwendet, um in diesem Moment die gewünschte Steuerungsgröße zu erfassen. Es ist dabei möglich, dass nach Aktivierung der Nachgiebigkeits- oder Steifigkeitsregelung zyklisch die gewünschte Steuerungsgröße erfasst wird und bei Eintritt des Loslass-Ereignisses zeitlich vor dem detektierten Ereignis ein Zeitabschnitt, in dem die Änderung der zu messenden Größe unter einer bestimmten Schwelle lag gesucht wird, beispielsweise nach einer Ruhepause gesucht wird, und anschließend über mehrere der fortlaufend bereits in der Ruhepause erfassten Steuerungsgrößen der Mittelwert gebildet wird.

In diesen Ausführungen kann das Ansteuern der Antriebe des Industrieroboters mittels Impedanzregelung oder Admittanzregelung erfolgen. Die Steuervorrichtung kann insoweit eingerichtet sein, die Nachgiebigkeits- oder Steifigkeitsregelung des Manipulators mittels Impedanzregelung oder Admittanzregelung zu erzeugen.

Eine Impedanzregelung basiert im Gegensatz zu einer Admittanzregelung auf einer vorhandenen Drehmomentenregelung auf Gelenkebene. Es werden die Abweichung der tatsächlichen Lage von einer definierten Solllage gemessen und entsprechend des gewünschten dynamischen Verhaltens eine gewünschte verallgemeinerte Kraft, bzw. Kräfte und Momente, bestimmt. Diese Kraft kann über die bekannte Kinematik des Manipulators auf entsprechende Gelenkdrehmomente abgebildet werden. Die Drehmomente können schließlich über die unterlagerte Drehmomentenregelung eingestellt werden.

Eine Admittanzregelung basiert auf einer vorhandenen Positionsregelung des Manipulators auf Gelenkebene. Hier müssen die von außen auf den Manipulator einwirkenden verallgemeinerten Kräften gemessen werden. Ausgehend von diesen Kräften wird eine, dem gewünschten dynamischen Verhalten entsprechende, Bewegung des Manipulators bestimmt, die über eine inverse Kinematik und die unterlagerte Positionsregelung an den Manipulator kommandiert wird.

In einer alternativen oder ergänzenden zweiten Variante des Verfahrens können als weitere Schritte vorgesehen sein, dass
- der Manipulatorarm durch die Steuervorrichtung in einer aktiven Nachgiebigkeitsregelung oder in einer Gravitationskompensationsregelung betrieben wird,
- durch das fortlaufende Erfassen der wenigstens einen stellungs- und/oder bewegungsbezogenen Größe der jeweils momentanen Pose des Manipulatorarms ein Stillstehen des Manipulatorarms von der Steuervorrichtung automatisch erkannt wird, und
- durch das Vergleichen der in vorbestimmten Zeitschritten erfassten stellungs- und/oder bewegungsbezogenen Größen mit einer vorbestimmten, das Abbruchkriterium darstellenden Mindeststillstandsdauer des Manipulatorarms bei Erreichen der Mindeststillstandsdauer das Speichern der Steuerungsgröße als Parameter des ausgewählten Programmbefehls in dem Roboterprogramm automatisch durch die Steuervorrichtung durchgeführt wird.

In dieser zweiten Variante des Verfahrens kann die Steuerungsvorrichtung ein repräsentatives Ereignis automatisch erkennen, welches ein charakteristisches Stillstehen des Manipulatorarms ist.

Das repräsentative Ereignis kann insoweit ein Ruhe-Ereignis, d.h. ein Stillstands-Ereignis sein.

Bei aktiver Nachgiebigkeits- oder Steifigkeitsregelung oder in einer Gravitationskompensationsregelung wird der Manipulatorarm ausgelenkt, um beispielsweise eine Pose zu lernen.

Sobald der Manipulatorarm für eine definierbare Zeit nicht mehr bewegt wird, also in Ruhe ist, d.h. die Gelenk-Istwinkel sich nur noch in einem parametrierbaren Winkelbereich ändern, wird dies als ein Ereignis zur Erfassung von Steuerungsgrößen, wie Pose, Kräfte, Momente, Sensorsignale usw. erkannt.

Das Ereignis selbst und ein Zeitraum kurz davor kann dem Anwender mit verschiedenen Methoden signalisiert werden. Beispielsweise mittels eines akustischen Signals, eines optischen Signals, wie einer LED, oder mittels Vibration. Durch Signalisierung des Zeitraums kurz vor Eintreten des Ereignisses kann dem Anwender die Möglichkeit gegeben werden, durch das Bewegen des Manipulatorarms das Speichern der aktuellen Steuerungsgröße zu verhindern, falls der gewünschte Zustand noch nicht erreicht wurde.

Beispielsweise wenn der Beginn einer Ruhe erkannt wird, könnte ein akustisches Signal in einer bestimmten Pulsfrequenz ertönen. Die Pulsfrequenz steigt bei weiterem Stillhalten des Manipulatorarms bis zum Dauerton an, dann wird die eingestellte Steuerungsgröße übernommen, d.h. gespeichert.

Von der zu erfassenden Steuerungsgröße kann auch hier ein Mittelwert über die Zeit errechnet werden, in der der Manipulatorarm in Ruhe war.

Wenn die Funktionalität nicht abgeschaltet wird und der Manipulatorarm anschließend wieder bewegt wird, kann beispielsweise die Ereignis-Überwachung erneut aktiviert werden. Dies kann beispielsweise verwendet werden, um eine aufgenommene Steuerungsgröße neu aufzunehmen, also zu überschreiben, oder um an einer anderen Stelle eine weitere Steuerungsgröße aufzunehmen, also beispielsweise eine ganze Reihe mehrerer anzufahrender Punkte aufzunehmen.

Mit den beschriebenen erfindungsgemäßen Verfahren lassen sich beim manuell geführten Programmieren eines Industrieroboters viele Bedienaktionen einsparen, was insbesondere dann von Vorteil ist, wenn beide Hände am Manipulatorarm oder dessen Flanschwerkzeug für eine präzise Positions- oder Kraft-/Momenten-Vorgabe erforderlich sind.

In allen Ausführungen des Verfahrens kann die wenigstens eine stellungs- und/oder bewegungsbezogene Größe des Manipulatorarms ein kartesischer oder gelenksspezifischer Positions- und/oder Lagewert des Manipulatorarms sein.

In allen Ausführungen des Verfahrens kann die wenigstens eine stellungs- und/oder bewegungsbezogene Größe des Manipulatorarms ein aus einem kartesischen oder gelenksspezifischen Positions- und/oder Lagewert des Manipulatorarms abgeleiteter Geschwindigkeits- und/oder Beschleunigungswert sein.

Alternativ oder ergänzend kann die wenigstens eine stellungs- und/oder bewegungsbezogene Größe des Manipulatorarms ein an dem Manipulatorarm gemessener Geschwindigkeits- und/oder Beschleunigungswert sein.

Generell kann aus den fortlaufend erfassten und zwischengespeicherten Steuerungsgrößen eine Steuerungsgröße als Parameter des ausgewählten Programmbefehls in dem Roboterprogramm gespeichert werden, die zeitlich eine vorbestimmt Anzahl von Zeitschritten vor dem Zeitpunkt liegt, zu dem das Abbruchkriterium erfüllt ist.

Jeder Art von Programmbefehl kann eine eigene bestimmte Anzahl von Zeitschritten zugeordnet sein und aufgrund des Auswählens der Programmbefehlsart, die diesem Programmbefehl zugeordnete Anzahl von Zeitschritten herangezogen werden, um die als Parameter zu speichernde Steuerungsgröße aus den fortlaufend erfassten und zwischengespeicherten Steuerungsgrößen herauszuselektieren.

Die aufzunehmende Steuerungsgröße kann eine Position, eine Orientierung, eine Geschwindigkeit, eine Beschleunigung und/oder eine Trajektorie eines Werkzeugbezugspunktes oder wenigstens eines Gelenks des Manipulatorarms, oder eine einwirkende Kraft, ein einwirkendes Moment, eine Nachgiebigkeit und/oder eine Steifigkeit des Manipulatorarms oder eine Größe eines externen Sensors, wie beispielsweise die Größe eines einen Abstand messenden Sensors sein.

Die auszuwählende Programmbefehlsart kann ein Bewegungsbefehl, insbesondere ein Punkt-zu-Punkt-Befehl, ein Linear-Befehl, ein Spline-Befehl oder ein höherwertiger Befehl, wie beispielsweise "Fahre bis Kontakt", "Füge Stift in Loch" sein, und/oder ein Parametrierungsbefehl, insbesondere der Nachgiebigkeit oder der Steifigkeit, einer die Steuerungsvorrichtung ansteuernden Roboterprogrammiersprache sein. Unter einem höherwertigen Befehl kann insoweit generell eine Befehlsart einer Roboterprogrammiersprache verstanden werden, die als ein hochsprachiger Befehl betrachtet werden kann, der einen über die grundlegenden Befehlsarten der jeweiligen Roboterprogrammiersprache hinausgehenden Befehlsinhalt aufweist.

Die Aufgabe der Erfindung wird außerdem gelöst durch einen Industrieroboter aufweisend eine Robotersteuerung, die ausgebildet und/oder eingerichtet ist, ein Roboterprogramm auszuführen, sowie aufweisend einen Manipulatorarm mit wenigstens drei Gelenken, die gemäß des Roboterprogramms automatisiert und/oder in einem Handfahrbetrieb automatisch verstellbar sind, wobei die Robotersteuerung ausgebildet und/oder eingerichtet ist, ein Verfahren wie beschrieben durchzuführen.

Ein konkretes Ausführungsbeispiel eines gemäß dem erfindungsgemäßen Verfahren betreibbaren Industrieroboters ist in der nachfolgenden Beschreibung unter Bezugnahme auf die beigefügten Figuren näher erläutert. Konkrete Merkmale dieses Ausführungsbeispiels können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine schematische Darstellung eines Industrieroboters in der Bauart eines Leichtbauroboters mit einer schematisch dargestellten Robotersteuerung und einem Manipulatorarm in einer Grundpose,
- Fig. 2: eine schematische Darstellung des Industrieroboters gemäß Fig. 1 mit der schematisch dargestellten Robotersteuerung und dem Manipulatorarm in einer manuell ausgelenkten Erfassungspose,
- Fig. 3: eine schematische Darstellung des Manipulatorarms in einer Grundpose aus der eine beispielhafte Bewegungsrichtung gelernt werden soll,
- Fig. 4: eine schematische Darstellung des Manipulatorarms gemäß Fig. 3 in einer manuell ausgelenkten Erfassungspose, welche in Verbindung mit der Grundpose eine Bewegungsrichtung definiert,
- Fig. 5: eine schematische Darstellung des Manipulatorarms nach einem Loslassen wieder in die Grundpose automatisch zurückgestellt, in der die Bewegungsrichtung gelernt ist, und
- Fig. 6: ein schematisches Ablaufdiagramm eines erfindungsgemäßen Verfahrens mit den Verfahrensschritten S1 bis S5.

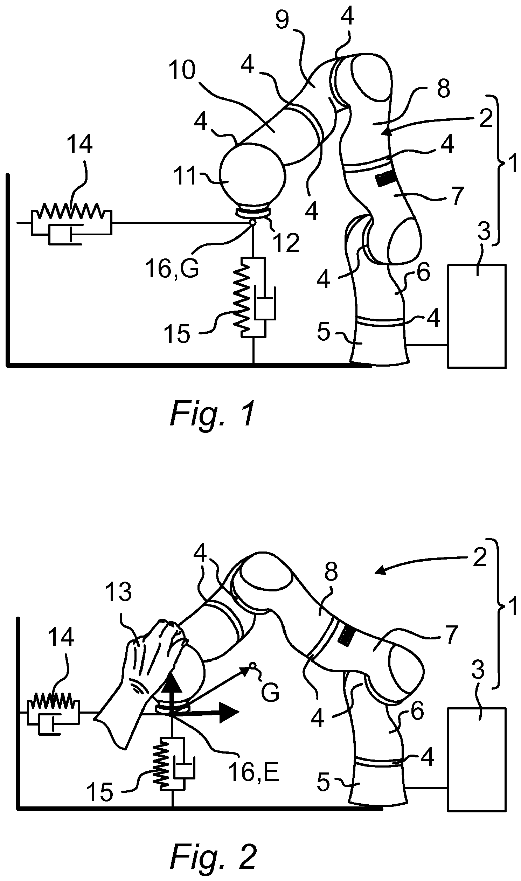

Die Fig. 1 und Fig. 2 zeigt einen Industrieroboter 1 in einer beispielhaften Ausführung als ein so genannter Leichtbauroboter, der einen Manipulatorarm 2 und eine Robotersteuerung 3 aufweist. Der Manipulatorarm 2 umfasst im Falle des vorliegenden Ausführungsbeispiels mehrere, nacheinander angeordnete und mittels Gelenke 4 drehbar miteinander verbundene Glieder 5 bis 12.

Die Robotersteuerung 3 des Industrieroboters 1 ist ausgebildet bzw. eingerichtet, ein Roboterprogramm auszuführen, durch welches die Gelenke 4 des Manipulatorarms 2 gemäß des Roboterprogramms automatisiert oder in einem Handfahrbetrieb automatisch verstellt bzw. drehbewegt werden können. Dazu ist die Robotersteuerung 3 mit ansteuerbaren elektrischen Antrieben verbunden, die ausgebildet sind, die Gelenke 4 des Industrieroboters 1 zu verstellen.

Die Robotersteuerung 3 ist ausgebildet und/oder eingerichtet, ein Verfahren zum Programmieren des Industrieroboters 1 durch manuell geführtes Bewegen des Manipulatorarms 2, wie im Folgenden anhand konkreter Ausführungsbeispiele näher beschrieben, durchzuführen.

In einer Steifigkeitsregelung oder Nachgiebigkeitsregelung des Industrieroboters 1 können Kräfte, Momente, Posen und Richtungen gelernt werden. Da in diesem Modus der Manipulatorarm 2 durch eine angesteuerte Federwirkung an einen Bezugspunkt (Grundpose G) zurückgezogen wird, muss der Manipulatorarm 2 im gewünschten, d.h. zu programmierenden Auslenkungspunkt (Erfassungspose E) mittels wenigstens einer Hand 13 eines Benutzers festgehalten werden. Die vorhandene Federwirkung in zwei Raumrichtungen ist in der Fig. 1 und Fig. 2 durch die schematisch dargestellten Feder-Dämpfer-Symbole 14 und 15 in der Ebene veranschaulicht.

Gemäß Fig. 1 wird der Manipulatorarm 2 durch die Steuervorrichtung 3 zunächst in einer aktiven Nachgiebigkeitsregelung betrieben. Dabei erfolgt ein fortlaufendes Erfassen und Zwischenspeichern der wenigstens einen aufzunehmenden Steuerungsgröße, hier die Pose des Manipulatorarms 2 gemäß Fig. 2, mittels der Steuervorrichtung 3, wenn der Manipulatorarm 2, wie in Fig. 2 gezeigt, manuell mittels der Hand 13 aus einer Grundpose G heraus in eine Erfassungspose E hineinbewegt ist. Das Speichern der Steuerungsgröße, d.h. der Winkelwerte aller Gelenke 4 des Manipulatorarms 2 oder die aus den Winkelwerten transformierten kartesischen Positionswerte eines Werkzeugbezugspunktes 16 des Manipulatorarms 2, als Parameter des ausgewählten Programmbefehls in dem Roboterprogramm erfolgt, wenn durch das Vergleichen der erfassten stellungs- und/oder bewegungsbezogenen Größen mit den vorbestimmten stellungs- und/oder bewegungsbezogenen Größen, ein aufgrund der Nachgiebigkeitsregelung erfolgendes Zurückbewegen des Manipulatorarms 2 aus der Erfassungspose E in die Grundpose G durch die Steuervorrichtung 3 automatisch erkannt wird.

In dieser ersten Variante des Verfahrens kann die Steuerungsvorrichtung 3 ein repräsentatives Ereignis automatisch erkennen, welches das Zurückbewegen des Manipulatorarms 2 aus der Erfassungspose E gemäß Fig. 2 zurück in die Grundpose G gemäß Fig. 1 ist.

Das repräsentative Ereignis kann insoweit ein Loslass-Ereignis sein, wenn der Benutzer seine Hand 13 von dem Manipulatorarm 2 loslässt und der Manipulatorarm 2 aufgrund seiner Federeigenschaften (Feder-Dämpfer-Symbole 14 und 15) wieder in die Grundpose der Fig.1 zurückkehrt.

Beispielsweise bei einer aktiven Nachgiebigkeits- oder Steifigkeitsregelung kann der Manipulatorarm 2 aus der Grundpose G gemäß Fig. 1 heraus ausgelenkt werden, um eine Steuerungsgröße, beispielsweise eine Pose, eine Richtung, eine Kraft oder ein Moment zu lernen, d.h. in das Roboterprogramm aufzunehmen. Wenn die gewünschte Steuerungsgröße in einer aus der Grundpose G herausgelenkten, insoweit federvorgespannten Erfassungspose E des Manipulatorarms 2 gemäß Fig. 2 eingestellt ist, wird der Manipulatorarm 2 losgelassen. Aufgrund der Nachgiebigkeits- oder Steifigkeitsregelung schwenkt der Manipulatorarm 2 unmittelbar nach dem Loslassen wieder in die Grundpose G gemäß Fig. 1 zurück. Dieses Ereignis des Loslassens des ausgelenkten Manipulatorarms 2, identifiziert beispielsweise durch abrupte Änderung der gemessenen Gelenkmomente oder Gelenkwinkelwerte des Manipulatorarms 2, wird als eine stellungs- und/oder bewegungsbezogene Größe verwendet, um in diesem Moment die gewünschte Steuerungsgröße zu erfassen. Es ist dabei möglich, dass nach Aktivierung der Nachgiebigkeits- oder Steifigkeitsregelung zyklisch die gewünschte Steuerungsgröße erfasst wird und bei Eintritt des Loslass-Ereignisses zeitlich vor dem detektierten Ereignis ein Zeitabschnitt, in dem die Änderung der zu messenden Größe unter einer bestimmten Schwelle lag gesucht wird, beispielsweise nach einer Ruhepause gesucht wird, und anschließend über mehrere der fortlaufend bereits in der Ruhepause erfassten Steuerungsgrößen der Mittelwert gebildet wird.

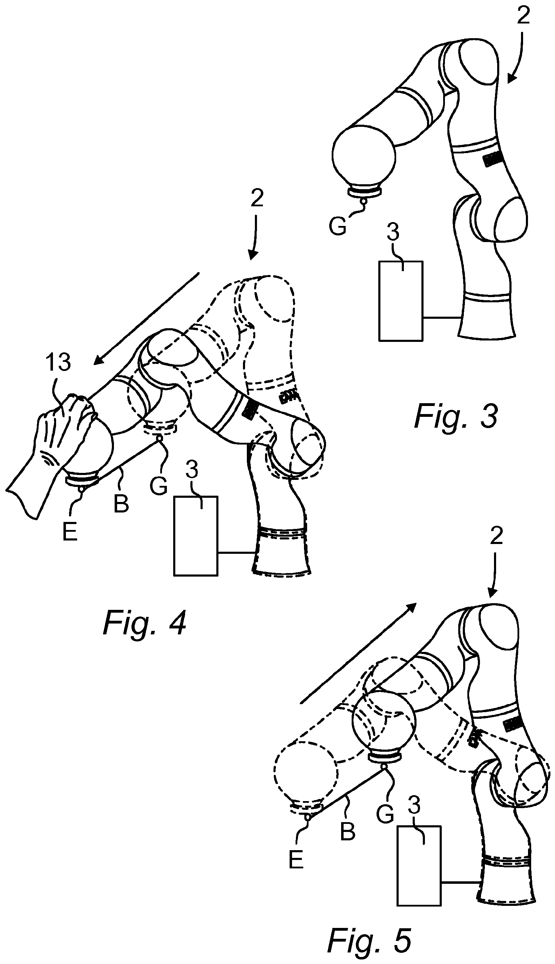

Die Figuren 3 bis 5 zeigen eine ergänzende zweite Variante des Verfahrens. In der Fig. 3 befindet sich der Manipulatorarm 2 wieder in der Grundpose G. Der Manipulatorarm 2 wird durch die Steuervorrichtung 3 in einer aktiven Nachgiebigkeitsregelung oder in einer Gravitationskompensationsregelung betrieben. Durch das fortlaufende Erfassen der wenigstens einen stellungs- und/oder bewegungsbezogenen Größe der jeweils momentanen Pose des Manipulatorarms 2 wird ein Stillstehen des Manipulatorarms 2 in der ausgelenkten Erfassungspose E gemäß Fig. 4 von der Steuervorrichtung 3 automatisch erkannt. Durch das Vergleichen der in vorbestimmten Zeitschritten erfassten stellungs- und/oder bewegungsbezogenen Größen mit einer vorbestimmten, das Abbruchkriterium darstellenden Mindeststillstandsdauer des Manipulatorarms bei Erreichen der Mindeststillstandsdauer, wird das Speichern der Steuerungsgröße als Parameter des ausgewählten Programmbefehls in dem Roboterprogramm automatisch durch die Steuervorrichtung 3 durchgeführt.

In dieser Variante des Verfahrens kann die Steuerungsvorrichtung 3 ein repräsentatives Ereignis automatisch erkennen, welches ein charakteristisches Stillstehen des Manipulatorarms 2 ist. Das repräsentative Ereignis kann insoweit ein Ruhe-Ereignis, d.h. ein Stillstands-Ereignis sein.

Bei aktiver Nachgiebigkeits- oder Steifigkeitsregelung oder in einer Gravitationskompensationsregelung wird der Manipulatorarm 2 gemäß Fig. 4 ausgelenkt, um eine Richtung zu lernen.

Sobald der Manipulatorarm für eine definierbare Zeit nicht mehr bewegt wird, also in Ruhe ist, d.h. die Gelenk-Istwinkel sich nur noch in einem parametrierbaren Winkelbereich ändern, wird dies als ein Ereignis zur Erfassung der Erfassungspose E erkannt. In dieser Variante soll jedoch kein Raumpunkt erlernt werden, sondern eine Bewegungsrichtung B. Ausgehend von der Grundpose G gemäß Fig. 3 wird deshalb der Manipulatorarm 2 von einem Benutzer mittels seiner Hand 13 in eine gewünschte Bewegungsrichtung B aus der Grundpose G gemäß Fig. 3 heraus in die sich dadurch ergebende Erfassungspose E gemäß Fig. 4 hineinbewegt. Nach einem Loslassen des Manipulatorarms 2 bewegt sich der Manipulatorarm 2, wie in Fig. 5 dargestellt, wieder in seine Grundpose gemäß Fig. 3 zurück. Ein solches automatisches Zurückziehen in die Ausgangsstellung über eine derartige Federwirkung findet im Falle des vorliegenden Ausführungsbeispiels nur bei einer aktiven Steifigkeitsregelung statt, nicht aber in einer Gravitationskompensation.

Das Lernen einer Bewegungsrichtung kann erforderlich sein, um später im automatischen Programmbetrieb beispielsweise eine Bewegung oder Kraft in diese Richtung auszuüben.

Im Moment des Loslassens des Manipulatorarms 2 entspannt sich seine Federeigenschaft, wie in Fig. 5 dargestellt, und sofort wird dieses Loslass-Ereignis von der Steuervorrichtung 3 automatisch erkannt und die Loslass-Pose gemäß Fig. 4 erfasst. Zusammen mit dem Ausgangspunkt in der Grundpose G ist der Richtungsvektor der Bewegungsrichtung B definiert. Der Manipulatorarm 2 kehrt zur vorherigen Grundpose der Fig. 3 durch Federwirkung zurück und der Steifigkeitsmodus kann abgeschaltet werden.

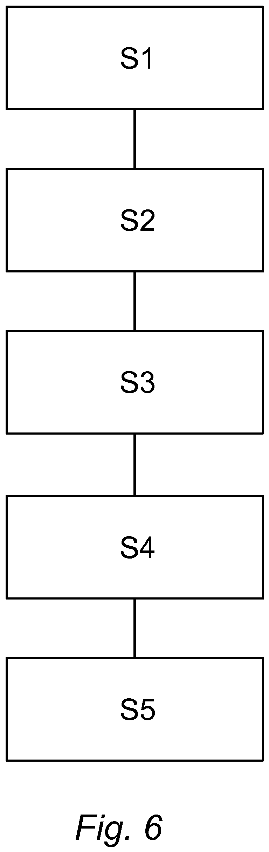

Die Fig. 6 zeigt schematisch einen Ablauf des erfindungsgemäßen Grundverfahrens zum Programmieren des Industrieroboters 1 durch manuell geführtes Bewegen des Manipulatorarms 2 des Industrieroboters 1 in wenigstens eine Pose, in der wenigstens eine in ein Roboterprogramm aufzunehmende Steuerungsgröße durch eine Steuervorrichtung 3 des Industrieroboters 1 erfasst und als Parameter eines zugeordneten Programmbefehls in dem Roboterprogramm gespeichert wird.

Im Verfahrensschritt S1 erfolgt ein Auswählen einer Programmbefehlsart, zu der zugeordnete Parameter gespeichert werden sollen.

Im Verfahrensschritt S2 erfolgt ein fortlaufendes Erfassen und Zwischenspeichern der wenigstens einen aufzunehmenden Steuerungsgröße in vorbestimmten Zeitschritten während eines manuell geführten Handhabens des Manipulatorarms.

Im Verfahrensschritt S3 erfolgt ein fortlaufendes Erfassen wenigstens einer stellungs- und/oder bewegungsbezogenen Größe der jeweils momentanen Pose des Manipulatorarms, in vorbestimmten Zeitschritten während des manuell geführten Handhabens des Manipulatorarms.

Im Verfahrensschritt S4 erfolgt ein Vergleichen der in vorbestimmten Zeitschritten erfassten stellungs- und/oder bewegungsbezogenen Größen mit vorbestimmten, ein Abbruchkriterium darstellenden stellungs- und/oder bewegungsbezogenen Größen.

Im Verfahrensschritt S5 erfolgt ein Speichern einer der Steuerungsgrößen als Parameter des ausgewählten Programmbefehls in dem Roboterprogramm, wenn einer der fortlaufend erfassten stellungs- und/oder bewegungsbezogenen Größen das Abbruchkriterium erfüllt.

## Patentansprüche

1. Verfahren zum Programmieren eines Industrieroboters (1) durch manuell geführtes Bewegen eines Manipulatorarms (2) des Industrieroboters (1) in wenigstens eine Pose, in der wenigstens eine in ein Roboterprogramm aufzunehmende Steuerungsgröße durch eine Steuervorrichtung (3) des Industrieroboters (1) erfasst und als Parameter eines zugeordneten Programmbefehls in dem Roboterprogramm gespeichert wird, aufweisend die Schritte:
- Auswählen einer Programmbefehlsart, zu der zugeordnete Parameter gespeichert werden sollen,
- fortlaufendes Erfassen und Zwischenspeichern der wenigstens einen aufzunehmenden Steuerungsgröße in vorbestimmten Zeitschritten während eines manuell geführten Handhabens des Manipulatorarms (2),
- fortlaufendes Erfassen wenigstens einer stellungs- und/oder bewegungsbezogenen Größe der jeweils momentanen Pose des Manipulatorarms (2), in vorbestimmten Zeitschritten während des manuell geführten Handhabens des Manipulatorarms (2), und weiter **gekennzeichnet durch** die Schritte:
- automatisches Vergleichen durch die Steuervorrichtung (3) der in vorbestimmten Zeitschritten erfassten stellungs- und/oder bewegungsbezogenen Größen mit vorbestimmten, ein Abbruchkriterium darstellenden stellungs- und/oder bewegungsbezogenen Größen, um ein repräsentatives Ereignis automatisch zu erkennen, welches eine charakteristische Bewegung des Manipulatorarms oder ein charakteristisches Stillstehen des Manipulatorarms ist, welches automatisch von der Steuervorrichtung als ein Signal interpretiert wird, die gewünschte Steuerungsgröße zu speichern, und
- Speichern der gewünschten Steuerungsgröße als Parameter des ausgewählten Programmbefehls in dem Roboterprogramm, wenn einer der fortlaufend erfassten stellungs- und/oder bewegungsbezogenen Größen das Abbruchkriterium erfüllt.

2. Verfahren nach Anspruch 1, bei dem
- der Manipulatorarm (2) durch die Steuervorrichtung (3) in einer aktiven Nachgiebigkeitsregelung betrieben wird,
- das fortlaufende Erfassen und Zwischenspeichern der wenigstens einen aufzunehmenden Steuerungsgröße mittels der Steuervorrichtung (3) erfolgt, wenn der Manipulatorarm (2) manuell aus einer Grundpose (G) heraus in eine Erfassungspose (E) hineinbewegt ist und
- das Speichern der Steuerungsgröße als Parameter des ausgewählten Programmbefehls in dem Roboterprogramm erfolgt, wenn durch das Vergleichen der erfassten stellungs- und/oder bewegungsbezogenen Größen mit den vorbestimmten stellungs- und/oder bewegungsbezogenen Größen, ein aufgrund der Nachgiebigkeitsregelung erfolgendes Zurückbewegen des Manipulatorarms (2) aus der Erfassungspose (E) in die Grundpose (G) durch die Steuervorrichtung (3) automatisch erkannt wird.

3. Verfahren nach Anspruch 1 oder 2, bei dem
- der Manipulatorarm (2) durch die Steuervorrichtung (3) in einer aktiven Nachgiebigkeitsregelung oder in einer Gravitationskompensationsregelung betrieben wird,
- durch das fortlaufende Erfassen der wenigstens einen stellungs- und/oder bewegungsbezogenen Größe der jeweils momentanen Pose des Manipulatorarms (2) ein Stillstehen des Manipulatorarms (2) von der Steuervorrichtung (3) automatisch erkannt wird, und
- durch das Vergleichen der in vorbestimmten Zeitschritten erfassten stellungs- und/oder bewegungsbezogenen Größen mit einer vorbestimmten, das Abbruchkriterium darstellenden Mindeststillstandsdauer des Manipulatorarms (2) bei Erreichen der Mindeststillstandsdauer das Speichern der Steuerungsgröße als Parameter des ausgewählten Programmbefehls in dem Roboterprogramm automatisch durch die Steuervorrichtung (3) durchgeführt wird.

4. Verfahren nach einem der Ansprüche 1 bis 3, bei dem die wenigstens eine stellungs- und/oder bewegungsbezogene Größe des Manipulatorarms (2) ein kartesischer oder gelenksspezifischer Positions- und/oder Lagewert des Manipulatorarms (2) ist.

5. Verfahren nach einem der Ansprüche 1 bis 4, bei dem die wenigstens eine stellungs- und/oder bewegungsbezogene Größe des Manipulatorarms (2) ein aus einem kartesischen oder gelenksspezifischen Positions- und/oder Lagewert des Manipulatorarms (2) abgeleiteter Geschwindigkeits- und/oder Beschleunigungswert ist.

6. Verfahren nach einem der Ansprüche 1 bis 5, bei dem die wenigstens eine stellungs- und/oder bewegungsbezogene Größe des Manipulatorarms (2) ein an dem Manipulatorarm (2) gemessener Geschwindigkeits- und/oder Beschleunigungswert ist.

7. Verfahren nach einem der Ansprüche 1 bis 6, bei dem aus den fortlaufend erfassten und zwischengespeicherten Steuerungsgrößen eine Steuerungsgröße als Parameter des ausgewählten Programmbefehls in dem Roboterprogramm gespeichert wird, die zeitlich eine vorbestimmte Anzahl von Zeitschritten vor dem Zeitpunkt liegt, zu dem das Abbruchkriterium erfüllt ist.

8. Verfahren nach Anspruch 7, bei dem jeder Art von Programmbefehl eine eigene bestimmte Anzahl von Zeitschritten zugeordnet ist und aufgrund des Auswählens der Programmbefehlsart, die diesem Programmbefehl zugeordnete Anzahl von Zeitschritten herangezogen wird, um die als Parameter zu speichernde Steuerungsgröße aus den fortlaufend erfassten und zwischengespeicherten Steuerungsgrößen herauszuselektieren.

9. Verfahren nach einem der Ansprüche 1 bis 8, bei dem die aufzunehmende Steuerungsgröße eine Position, eine Orientierung, eine Geschwindigkeit, eine Beschleunigung und/oder eine Trajektorie eines Werkzeugbezugspunktes oder wenigstens eines Gelenks des Manipulatorarms (2), oder eine einwirkende Kraft, ein einwirkendes Moment, eine Nachgiebigkeit und/oder eine Steifigkeit des Manipulatorarms (2), oder eine Größe eines externen Sensors ist.

10. Verfahren nach einem der Ansprüche 1 bis 9, bei dem die auszuwählende Programmbefehlsart ein Bewegungsbefehl, insbesondere ein Punkt-zu-Punkt-Befehl, ein Linear-Befehl oder ein Spline-Befehl ist und/oder ein Parametrierungsbefehl, insbesondere der Nachgiebigkeit oder der Steifigkeit, und/oder ein höherwertiger Befehl, wie beispielsweise "Fahre bis Kontakt", "Füge Stift in Loch", einer die Steuerungsvorrichtung (3) ansteuernden Roboterprogrammiersprache ist.

11. Industrieroboter aufweisend eine Robotersteuerung (3), die ausgebildet und/oder eingerichtet ist, ein Roboterprogramm auszuführen, sowie aufweisend einen Manipulatorarm (2) mit wenigstens drei Gelenken (4), die gemäß des Roboterprogramms automatisiert und/oder in einem Handfahrbetrieb automatisch verstellbar sind, wobei die Robotersteuerung (3) ausgebildet und/oder eingerichtet ist, ein Verfahren nach einem der Ansprüche 1 bis 10 durchzuführen.

## Claims

1. Method for programming an industrial robot (1) by manually guiding a manipulator arm (2) of the industrial robot (1) into at least one pose, in which at least one control variable to be included in a robot program is recorded by a control device (3) of the industrial robot (1) and is saved as a parameter of an associated program command in the robot program, comprising the steps:
- selecting a type of program command, to which assigned parameters are to be saved,
- continuously recording and buffering the at least one control variable to be recorded in predefined time steps during a manually guided handling of the manipulator arm (2),
- continuously detecting at least one position-related and/or motion-related variable of the respective current pose of the manipulator arm (2), in predetermined time steps during the manually guided handling of the manipulator arm (2), and also **characterised by** the steps:
- the control device (3) automatically comparing the position-related and/or motion-related variables recorded in predetermined time steps with predetermined position-related and/or motion-related variables representing a termination criterion, in order to recognise automatically a representative event, which is a characteristic movement of the manipulator arm or a characteristic standstill of the manipulator arm, which is automatically interpreted by the control device as a signal to save the desired control variable and
- saving the desired control variable as a parameter of the selected program command in the robot program, when one of the continuously recorded position-related and/or motion-related variables satisfies the termination criterion.

2. Method according to claim 1, wherein
- the manipulator arm (2) is operated by the control device (3) in an active compliance control mode,
- the continuous recording and buffering of the at least one control variable, which is to be entered, are performed by the control device (3) when the manipulator arm (2) is moved manually out of a base pose (G) into a record pose (E) and
- the saving of the control variable as a parameter of the selected program command in the robot program takes place when, based on the comparison of the recorded position-related and/or motion-related variables with the predefined position-related and/or motion-related variables, the control device (3) automatically recognises that, due to the compliance control mode, the manipulator arm (2) has been moved back out of the record pose (E) into the base pose (G).

3. Method according to claim 1 or 2, wherein
- the manipulator arm (2) is operated by the control device (3) in an active compliance control mode or in a gravitational compensation control mode,
- the continuous recording of the at least one position-related and/or motion-related variable of the respective current pose of the manipulator arm (2) allows the control device (3) to automatically recognise the standstill of the manipulator arm (2), and
- the comparison of the position-related and/or motion-related variables, which are recorded in predefined time steps, with a predefined minimum standstill period of the manipulator arm (2), which constitutes the termination criterion, upon reaching the minimum standstill period allows the control device (3) to automatically save the control variable as a parameter of the selected program command in the robot program.

4. Method according to any of claims 1 to 3, wherein the at least one position-related and/or motion-related variable of the manipulator arm (2) is a Cartesian or joint-specific position and/or orientation value of the manipulator arm (2).

5. Method according to any of claims 1 to 4, wherein the at least one position-related and/or motion-related variable of the manipulator arm (2) is a speed and/or acceleration value derived from a Cartesian or joint-specific position and/or orientation value of the manipulator arm (2).

6. Method according to any of claims 1 to 5, wherein the at least one position-related and/or motion-related variable of the manipulator arm (2) is a speed and/or acceleration value measured on the manipulator arm (2).

7. Method according to any of claims 1 to 6, wherein from the continuously recorded and buffered control variables a control variable is saved as a parameter of the selected program command in the robot program, which saved control variable is, in terms of time, a predefined number of time steps before the time at which the termination criterion is satisfied.

8. Method according to claim 7, wherein any type of program command is assigned its own specific number of time steps, and based on the selection of the type of program command, the number of time steps that are assigned to said program command is used to select the control variable, which is to be saved as a parameter, from the continuously recorded and buffered stored control variables.

9. Method according to any of claims 1 to 8, wherein the control variable to be recorded is a position, an orientation, a speed, an acceleration and/or a trajectory of a tool reference point or at least one joint of the manipulator arm (2), or a force that is applied, a torque that is applied, a flexibility and/or a stiffness of the manipulator arm (2) or a variable of an external sensor.

10. Method according to any of claims 1 to 9, wherein the type of program command to be selected is a movement command, in particular a point-to-point command, a linear command or a spline command and/or a parametrisation command, in particular of flexibility or stiffness, and/or a higher-order command, such as for example "move until contact", "join pin into hole", of a robot programming language controlling the control device (3).

11. Industrial robot comprising a robot control (3), which is designed and/or configured to execute a robot program, and comprising a manipulator arm (2) with at least three joints (4), which can be automated according to the robot program and/or adjusted automatically in a manual operation, wherein the robot control (3) is designed and/or configured to perform a method according to any of claims 1 to 10.

## Revendications

1. Procédé de programmation d'un robot industriel (1) par le déplacement guidé manuellement d'un bras de manipulateur (2) du robot industriel dans au moins une pose dans laquelle au moins une grandeur de commande à enregistrer dans un programme de robot est saisie par un dispositif de commande (3) du robot industriel (1) et mise en mémoire dans le programme de robot en tant que paramètre d'une instruction de programme associée, présentant les étapes suivantes :
- choix d'un type d'instruction de programme auquel des paramètres associés doivent être mis en mémoire,
- saisie et mise en mémoire-tampon en continu de ladite au moins une grandeur de commande à enregistrer à des intervalles de temps prédéterminés pendant une manipulation guidée manuellement du bras de manipulateur (2),
- saisie en continu d'au moins une grandeur en fonction de la position et/ou en fonction du mouvement de la pose respectivement momentanée du bras de manipulateur (2), à des intervalles de temps prédéterminés pendant une manipulation guidée manuellement du bras de manipulateur (2), et en outre **caractérisé par** les étapes suivantes :
- comparaison automatique, par le dispositif de commande (3), des grandeurs en fonction de la position et/ou en fonction du mouvement saisies à des intervalles de temps prédéterminés, avec des grandeurs en fonction de la position et/ou en fonction du mouvement prédéterminées, représentant un critère d'interruption, pour reconnaître automatiquement un événement représentatif qui est un mouvement caractéristique du bras de manipulateur ou un arrêt caractéristique du bras de manipulateur qui est automatiquement interprété par le dispositif de commande comme étant un signal pour mettre en mémoire la grandeur de commande souhaitée, et
- mise en mémoire de la grandeur de commande souhaitée en tant que paramètre de l'instruction de programme choisie dans le programme de robot lorsqu'une des grandeurs en fonction de la position et/ou en fonction du mouvement saisies en continu satisfait au critère d'interruption.

2. Procédé selon la revendication 1, dans lequel
- le bras de manipulateur (2) fonctionne dans un régime de flexibilité active grâce au dispositif de commande (3),
- la saisie et la mise en mémoire-tampon en continu de ladite au moins une grandeur de commande à enregistrer a lieu au moyen du dispositif de commande lorsque le bras de manipulateur (2) est déplacé à la main depuis une pose de base (G) jusque dans une pose de détection (E)
- la mise en mémoire de la grandeur de commande en tant que paramètre de l'instruction de programme choisie dans le programme de robot a lieu si, par la comparaison des grandeurs en fonction de la position et/ou en fonction du mouvement détectées avec les grandeurs en fonction de la position et/ou en fonction du mouvement prédéterminées, un déplacement en retour du bras de manipulateur (2) effectué en raison du régime de flexibilité depuis la pose de saisie (E) jusque dans la pose de base (G) est reconnu automatiquement par le dispositif de commande (3).

3. Procédé selon la revendication 1 ou 2, dans lequel
- le bras de manipulateur (2) est actionné par le dispositif de commande (3) dans un régime de flexibilité ou dans un régime de compensation de gravitation,
- par la saisie continue de ladite au moins une grandeur en fonction de la position et/ou en fonction du mouvement de la pose respectivement momentanée du bras de manipulateur (2), un arrêt du bras de manipulateur (2) est reconnu automatiquement par le dispositif de commande, et
- par la comparaison des grandeurs en fonction de la position et/ou en fonction du mouvement saisies à des intervalles de temps prédéterminés, avec une durée d'arrêt minimum prédéterminée du bras de manipulateur (2), représentant le critère d'interruption, lorsque la durée d'arrêt minimum est atteinte, la mise en mémoire de la grandeur de commande en tant que paramètre de l'instruction de programme choisie dans le programme de robot, est automatiquement effectuée par le dispositif de commande (3).

4. Procédé selon l'une des revendications 1 à 3, dans lequel ladite au moins une grandeur en fonction de la position et/ou en fonction du mouvement du bras de manipulateur (2) est une valeur de position et/ou de situation cartésienne ou spécifique des articulations du bras de manipulateur (2).

5. Procédé selon l'une des revendications 1 à 4, dans lequel ladite au moins une grandeur en fonction de la position et/ou en fonction du mouvement du bras de manipulateur (2) est une valeur de vitesse et/ou d'accélération dérivée d'une valeur position et/ou de situation cartésienne ou spécifique des articulations du bras de manipulateur (2).

6. Procédé selon l'une des revendications 1 à 5, dans lequel ladite au moins une grandeur en fonction de la position et/ou en fonction du mouvement du bras de manipulateur (2) est une valeur de vitesse et/ou d'accélération mesurée sur le bras de manipulateur (2).

7. Procédé selon l'une des revendications 1 à 6, dans lequel parmi les grandeurs de commande saisies et mises en mémoire intermédiaire en continu, une grandeur de commande est mise en mémoire dans le programme de robot en tant que paramètre de l'instruction de programme choisie, celle-ci se trouvant, dans le temps, à un nombre prédéterminé d'intervalles de temps avant le moment où le critère d'interruption est satisfait.

8. Procédé selon la revendication 7, dans lequel à chaque type d'instruction de programme est associé un propre nombre déterminé d'intervalles de temps, et en raison du choix du type d'instruction de programme, le nombre d'intervalle de temps associé à cette instruction de programme est mis à contribution pour sélectionner, parmi les grandeurs de commande saisies et mises en mémoire intermédiaire en continu, la grandeur de commande à mettre en mémoire en tant que paramètre.

9. Procédé selon l'une des revendications 1 à 8, dans lequel la grandeur de commande à enregistrer est une position, une orientation, une vitesse, une accélération et/ou une trajectoire d'un point de référence d'outil ou au moins d'une articulation du bras de manipulateur (2), ou une force appliquée, un couple appliqué, une flexibilité et/ou une rigidité du bras de manipulateur (2), ou une grandeur d'un capteur externe.

10. Procédé selon l'une des revendications 1 à 9, dans lequel le type d'instruction de programme à choisir est une commande de déplacement, en particulier une commande de point à point, une commande linéaire ou une commande Spline et/ou une commande de paramétrage, en particulier de la flexibilité ou de la rigidité, et/ou une commande de niveau supérieur comme par exemple "avance jusqu'à un contact" "introduit la tige dans le trou" d'une langue de programmation de robot pilotée par le dispositif de commande (3).

11. Robot industriel présentant une commande de robot (3) qui est réalisée et/ou configurée pour exécuter un programme de robot, ainsi que présentant un bras de manipulateur (2) avec au moins trois articulations (4) qui sont automatisées selon ce programme de robot et/ou automatiquement réglables dans un fonctionnement manuel, la commande de robot (3) étant réalisée et/ou configurée pour exécuter un procédé selon l'une des revendications 1 à 10.
